# EUROPÄISCHE PATENTANMELDUNG

(11) **EP 0 909 726 A1**
(43) Veröffentlichungstag der Anmeldung: **21.04.1999**
(21) Anmeldenummer: 98118166.2
(22) Anmeldetag: 25.09.1998
(51) Int. Cl.: B65G 17/12, B23K 37/047

(54) **Transportsystem**

(30) Priorität: 17.10.1997 DE 19746020
(71) Anmelder: SMT Maschinengesellschaft mbH, D-97877 Wertheim (DE)
(72) Erfinder: Ulzhöfer, Hans-Günther, Dr., 97877 Wertheim (DE)
(74) Vertreter: Pellmann, Hans-Bernd, Dipl.-Ing.

(57) **Zusammenfassung**

Offenbart wird ein Transportsystem mit einer Fördereinrichtung, die zumindest zwei Förderglieder (9a,9b) umfaßt, wobei der Gegenstand mit zumindest jeweils einem Kontaktpunkt mit einem Förderglied in Verbindung ist. Eines der Förderglieder (9b) wird mittels einer ersten Umlenkeinrichtung (12a) umgelenkt, ohne den Kontakt zum Gegenstand zu verlieren und das andere Förderglied (9a) wird mittels einer zweiten Umlenkeinrichtung (13b) so umgelenkt, daß es dabei den Kontakt zum Gegenstand verliert, nachdem ein anderes Förderglied (9b) mit zumindest einem weiteren Kontaktpunkt des Gegenstandes in Verbindung getreten ist, wobei die Kontaktpunkte in einem Abstand zueinander angeordnet sind, um eine stabile Halterung des Gegenstandes zu gewährleisten. Mit dem Transportsystem ist eine erschütterungsfreie Förderung eines Gegenstandes möglich. Der Gegenstand kann so gefördert werden, daß er immer waagrecht gehalten wird, wobei sich die Transportrichtung mehrmals von der Horizontalen in die Vertikale oder umgekehrt ändern kann.

## Beschreibung

Die Erfindung betrifft ein Transportsystem gemäß dem Oberbegriff des Patentanspruchs 1.

Häufig sollen Gegenstände bei unterschiedlichen Fertigungsaufgaben in unterschiedlichen Ebenen transportiert werden, bzw. von zunächst in einer Ebene anschließend in eine andere Ebene transportiert werden, wobei mittels des Transportsystems der Gegenstand von einer Ebene in die andere Ebene überführt werden muß.

Eine charakteristische Transportaufgabe für einen Gegenstand ist das Transportieren zunächst in der Horizontalen und Übergabe des Gegenstandes an einen Transport in der Vertikalen, um den Gegenstand auf eine andere Ebene zu befördern, und in dieser Ebene Weitertransport des Gegenstandes in der Horizontalen. Ggf. anschließend wieder vertikaler Transport, um den Gegenstand zur Ausgangsebene zurückzubringen.

Üblicherweise werden für solche Transportaufgaben Horizontalförderer und Vertikalförderer eingesetzt und der Gegenstand mittels einer Übergabeeinrichtung von einem Förderer an den nächsten Förderer übergeben. Bei bestimmten Anwendungen muß dabei diese Übergabe möglichst erschütterungsfrei erfolgen. Werden auf den Gegenstand beispielsweise Beschichtungen oder dergleichen aufgebracht, kann es aufgrund von Erschütterungen zu einer fehlerhaften Beschichtung kommen. Häufig muß das zu befördernde Gut erschütterungsfrei und waagrecht gehalten werden, um ein Verlaufen aufgebrachter Beschichtungen zu vermeiden.

Auch in der Löttechnik kommt es auf einen erschütterungsfreien Transport durch die Lötanlage an, um die Qualität der Lötung nicht zu beeinträchtigen.

Aus der DE 39 09 786 A1 ist ein Transportsystem mit zumindest zwei zueinander senkrecht zur Förderrichtung beabstandeten, als Zugmittel ausgebildeten Fördermitteln bekannt, die einen Gegenstand mit zumindest jeweils einem Kontaktpunkt von einem auf ein anderes Niveau und anschließend in Richtung der Zugmittelgeschwindigkeit transportieren, wobei eine Fördereinheit in zwei zueinander beabstandeten Förderstrecken die gleiche Geschwindigkeitsrichtung aufweist, in deren einer Förderstrecke das Zugmittel einen Gegenstand um eine erste Umlenkeinrichtung transportiert und in deren anderer Förderstrecke das Zugmittel mittels einer zweiten Umlenkeinrichtung umgelenkt wird.

Die DE-AS 15 84 561 beschreibt eine Fördereinrichtung für keramische Formlinge, die mehrere hintereinander geschaltete und gegeneinander jeweils seitlich versetzte Einheiten aus zwei oder mehreren zueinander parallelen und über Umlenkrollen endlos geführte Seilbahnen aufweist, wobei zwei oder mehr Seilbahneinheiten übereinander angeordnet sein können und die hintereinander geschalteten Einheiten gegeneinander jeweils etwa um die Breite der Umlenkrollen seitlich versetzt sein können.

Aus der DE 81 30 040.9 U1 ist ein Führungsprofil für die Lötrahmentransportketten in Lötanlagen bekannt, das einen Kettenführungskanal aufweist, um Lötrahmen mittels Transportketten durch Lötanlagen zu fördern.

Der Erfindung liegt die Aufgabe zugrunde, ein Transportsystem zum Transport eines Gegenstandes zwischen unterschiedlichen Ebenen zu schaffen, das einen möglichst erschütterungsfreien Transport gewährleistet.

Diese Aufgabe wird durch die Merkmale des Patentanspruchs 1 gelöst. Der Erfindung liegt der Grundgedanke zugrunde, bei dem Transport des Gegenstandes zumindest ein Zugmittel vorzusehen, das beim Transport des Gegenstandes von einer Ebene in die andere Ebene umgelenkt und mit dem Gegenstand weiter transportiert wird. Auf diese Weise wird es möglich, den Gegenstand mit zumindest einem Zugmittel in Verbindung zu belassen, so daß keine vollständige Übergabe des Gegenstandes von einer Fördereinrichtung an eine andere Fördereinrichtung stattfindet, sondern der Gegen-stand mit dem zumindest einen Zugmittel verbunden bleibt, wodurch Erschütterungen weitgehend vermieden werden können.

Der Gegenstand wird an mehreren Kontaktpunkten mit den Zugmitteln verbunden. Es hat sich jedoch gezeigt, daß die Trennung einzelner Kontakte und die Kontaktaufnahme durch andere Zugmittel nicht zu Erschütterungen des Gegenstandes führen, solange der Gegenstand nicht vollständig übergeben werden muß und immer mit zumindest einem Kontaktpunkt mit einem Zugmittel verbunden bleibt. Das erfindungsgemäße Transportsystem wird anschaulich anhand eines bevorzugten Ausführungsbeispiels erläutert werden.

In den meisten Fällen werden flache Gegenstände transportiert. Um einen solchen Gegenstand stabil transportieren zu können, muß dieser an mindestens drei Punkten mit der Fördereinrichtung verbunden sein.

Werden lediglich zwei Zugmittel verwendet, so lassen sich stabförmige Gegenstände ausreichend stabil fördern. Für flächige Gegenstände ist dies in der Regel jedoch nicht ausreichend. Folgend wird die Transport eines flächigen Gegenstandes mit Hilfe von drei Zugmitteln beschrieben, wobei diese Beschreibung grundsätzlich auch für einen Transport mit nur zwei Zugmitteln zutrifft. Auch die Erläuterung vorteilhafter Weiterbildungen wird vorwiegend anhand eines Transportsystems mit drei oder vier Zugmltteln vorgenommen. Dennoch können die meisten Weiterbildungen auch bei einem Transportsystem mit nur zwei Zugmitteln zum Einsatz kommen.

Mit der Erfindung kann ein Transportsystem mit einer Fördereinrichtung geschaffen werden, die drei oder mehrere Zugmittel umfaßt, wobei der Gegenstand mit zumindest jeweils einem Kontaktpunkt mit einem Zugmittel in Verbindung ist. D.h. der Gegenstand ist also mit mindestens drei Punkten mit den Zugmitteln verbunden. Bei den Zugmitteln kann es sich um Ketten, Bänder und dergleichen handeln. Die Punkte sind jeweils mit einem bestimmten Abstand zueinander angeordnet, um eine stabile kippsichere Halterung des Gegenstandes zu erreichen. Zwei der Zugmittel werden mittels einer ersten Umlenkeinrichtung umgelenkt, ohne den Kontakt zum Gegenstand zu verlieren, und bewirken somit einen ruhigen und weitgehend erschütterungsfreien Transport des Gegenstandes auch in eine andere Ebene. Das dritte Zugmittel oder auch noch weitere Zugmittel werden mittels einer zweiten Umlenkeinrichtung umgelenkt und verlieren dabei den Kontakt zum Gegenstand, nachdem ein anderes Zugmittel mit zumindest einem weiteren Kontaktpunkt des Gegenstandes in Verbindung getreten ist, um den Gegenstand sicher zu halten, wenn die Kontaktpunkte den Kontakt verlieren, so daß der Gegenstand immer von mindestens drei Kontaktpunkten gehalten wird.

Selbstverständlich kann ein viertes Zugmittel vorgesehen sein, das mit zumindest einem Kontaktpunkt mit dem Gegenstand in Verbindung ist und wie das dritte Zugmittel mittels der zweiten Umlenkeinrichtung umgelenkt wird und dabei den Kontakt zum Gegenstand verliert.

Zur sicheren Halterung des Gegenstandes kann ein weiteres Zugmittel vor dem Verlust des Kontaktes des Gegenstandes mit einem Zugmittel mit zumindest einem Kontaktpunkt des Gegenstandes in Verbindung treten.

Um Kontaktpunkte bestimmter Zugmittel außer Eingriff zu bringen, können diese Zugmittel mittels der zweiten Umlenkeinrichtung um einen Winkel umgelenkt werden, der zumindest dem Winkel entspricht, um den Zugmittel mittels der ersten Umlenkeinrichtung umgelenkt werden. Häufig wird sich ein Umlenkwinkel der zweiten Umlenkeinrichtung größer dem Umlenkwinkel der ersten Umlenkeinrichtung bewähren.

Die Umlenkung der Zugmittel sollte synchron erfolgen. In vielen Fällen wird eine Umlenkung von Zugmitteln mittels der ersten Umlenkeinrichung um ca. 90° sinnvoll sein, um die gewünschte Förderaufgabe, die häufig darin besteht, einen Gegenstand zunächst vertikal und dann horizontal zu fördern, gerecht zu werden.

In den meisten Fällen ist auch eine parallele Führung der zumindest drei Zugmittel bis zu den Umlenkeinrichtungen zweckmäßig und eine Führung zumindest eines Zugmittels über die zweite Umlenkeinrichtung als endloses Zugmittel. Grundsätzlich können alle Zugmittel als endlose Zugmittel ausgeführt sein, die durch die genannten Umlenkeinrichtungen oder weitere Umlenkeinrichtungen in geeigneter Weise umgelenkt werden.

Vorteilhaft lassen sich auch mehrere der genannten Zugmittel zu einem Element zusammenhängen, das durch geeignete Führung entsprechend umlaufend geführt wird. Gemäß einer bevorzugten Ausführungsform, die in der Figurenbeschreibung näher erläutert wird, sind alle Zugmittel zusammenhängend in Form einer einzigen umlaufenden Kette ausgebildet.

An den Zugmitteln können in bestimmten Abständen Kontaktpunkte vorgesehen sein, die mit dem Gegenstand in Eingriff bringbar sind. Diese Kontaktpunkte können in Form von Auflagen für den Gegenstand ausgebildet sein. Der Gegenstand kann direkt von den Zugmitteln über genannte Kontaktpunkte getragen werden oder durch Zwischenschaltung eines Rahmens. Die Verwendung eines Rahmens hat den Vorteil, daß lediglich der Rahmen auf das Transportsystem abgestimmt werden muß, wohingegen im Rahmen selbst durch geeignete Auflagen unterschiedlichste beliebige Gegenstände aufgenommen werden können.

Der Rahmen kann zumindest eine Passierstelle zur Passage von Zugmitteln aufweisen. Anhand der Ausführungsbeispiele wird klar, daß bei zweckmäßiger Realisierung des beschriebenen Transportsystems die Stränge der Zugmittel dicht aneinander vorbeilaufen. Um dies zu ermöglichen, kann es hilfreich sein, die genannten Passierstellen am Rahmen vorzusehen. Passierstellen können auf unterschiedliche Weise gebildet werden. Passierstellen können durch einfache Nuten im Rahmen gebildet werden oder dadurch, daß die Aufnahme zur Herstellung der Verbindung Zugmittel-Rahmen auf die Rahmen aufgebracht, beispielsweise geschraubt werden, so daß neben diesen automatisch eine Passierstelle entsteht.

Um den gewünschten Kontakt zwischen Zugmittel und Rahmen herzustellen, können die Zugmittel mit Elementen versehen sein, die mit dem Rahmen in Eingriff gebracht werden können. Hierzu kann der Rahmen in bestimmten Abständen mehrere Aufnahmen für Elemente der Zugmittel aufweisen.

Häufig besteht die Förderaufgabe darin, einen Gegenstand nicht nur zunächst vertikal und dann horizontal zu fördern oder umgekehrt, sondern diesen anschließend von der Horizontalförderung aus wieder vertikal zu fördern, oder umgekehrt. Zu diesem Zweck können Zugmittel durch eine dritte und vierte Umlenkeinrichtung in derselben Weise nochmals umgelenkt werden. Ein solches System wird anhand der Ausführungsbeispiele näher erläutert.

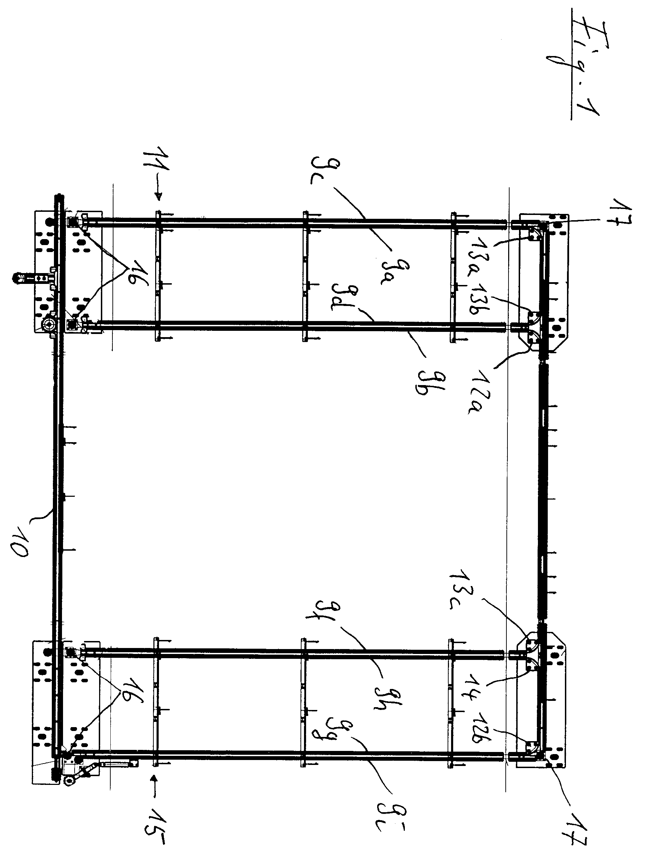

Soll ein Transport zunächst vertikal, beispielsweise aufwärts, dann horizontal und anschließend wieder vertikal, beispielsweise abwärts erfolgen, so kann eine Beladung des Systems von der Seite erfolgen, bei dem beschriebenen Ausführungsbeispiel beispielsweise von links in Figur 1 in den Aufwärtstransport und die Entnahme kann dann ebenfalls seitlich beispielsweise nach rechts aus dem Abwärtstransport heraus erfolgen. Eine andere Variante ist die Be- und Entladung in der Mitte des Systems. Das Werkstück fährt in der Mitte in das System ein wird dann beispielsweise nach links zum Aufwärtstransport gebracht und wird wiederum nach dem Abwärtstransport nach links zum Ausgangspunkt zurückgebracht. Das Be- und Entladen erfolgt dabei synchron.

Die Zugmittel können mittels einer vorgespannten Spanneinrichtung spannbar sein. Werden mehrere Zugmittel zu einem Element verbunden, können diese mittels einer gemeinsamen Spanneinrichtung straff gehalten werden. Das Transportsystem läßt sich mit nur einem Zugmittel pro Seite, also zwei Zugmitteln verwirklichen. Es können aber auch mehrere Zugmittel vorgesehen sein. Ein Zugmittel oder auch mehrere Zugmittel können von einem einzigen oder mehreren Motoren angetrieben werden. Wird ein Zugmittel von mindestens zwei Motoren angetrieben, kann durch eine entsprechende Motorregelung die nötige Spannung des Zugmittels gewährleistet werden.

Bewährt hat sich eine Konstruktion, bei der der Gegenstand oder Rahmen immer an einer Seite an mindestens zwei Kontaktpunkten mit Zugmitteln in Verbindung ist und an der gegenüberliegenden Seite mit mindestens einem Kontaktpunkt mit einem Zugmittel in Verbindung ist. Auf diese Weise wird der Gegenstand oder Rahmen an drei Punkten sicher gehalten. Eine Halterung an jeweils zwei Punkten pro gegenüberliegender Seite schafft insbesondere bei Gegenständen, deren Schwerpunkt in den Ecken liegt, eine verbesserte Halterung.

Bei dem beschriebenen bevorzugten Ausführungsbeispiel weist der Rahmen an einer Seite vier mögliche Kontaktpunkte und zwei Passierstellen für Zugmittel auf. Diese auch für einen zu fördernden Gegenstand mögliche Gestaltung weist Vorteile auf, die aus der Figurenbeschreibung ersichtlich werden.

Folgend werden zwei Ausführungsbeispiele näher erläutert.
Figur 1 zeigt ein erstes Ausführungsbeispiel von vorne, wobei nur eine Seite des Transportsystems dargestellt ist.
Figur 2 zeigt einen Rahmen des Transportsystems, der bei dem Ausführungsbeispiel gemäß Figur 1 verwendbar ist.
Figur 3 zeigt ein zweites Ausführungsbeispiel von vorne, wobei beide Seiten des Transportsystems dargestellt sind.
Figur 4 zeigt eine Spanneinrichtung der beschriebenen Ausführungsbeispiele zur Spannung der Zugmittel.

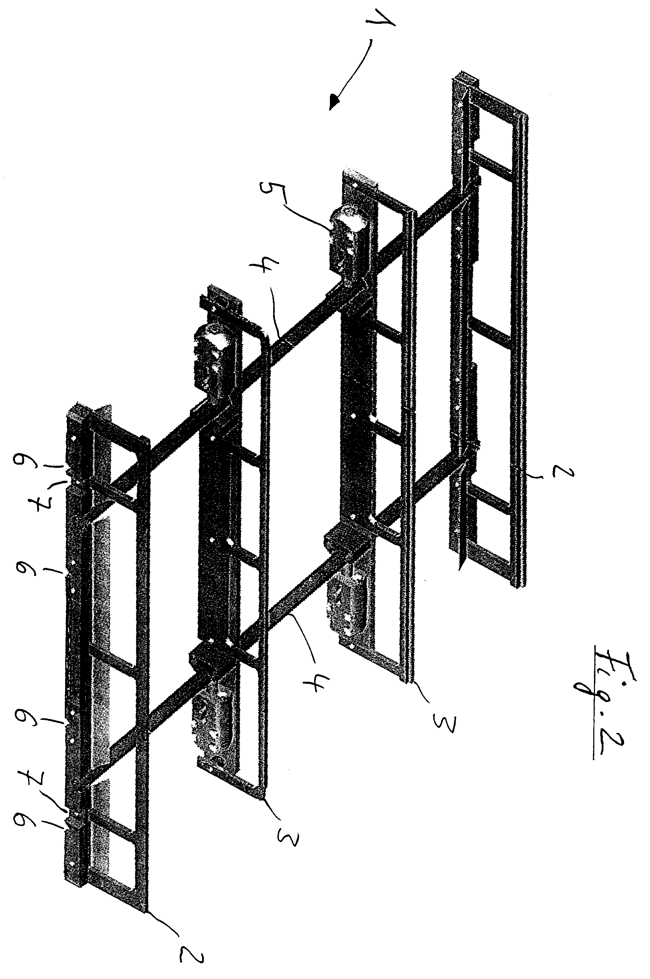

Das mit Figur 1 dargestellte Ausführungsbeispiel ist zum Transport flächiger Gegenstände ausgebildet, insbesondere zum Transport eines Rahmens 1, der in Figur 2 dargestellt ist. Dieser Rahmen 1 weist Endstücke 2 an den Seiten auf, die mit Zugmitteln 9 des Transportsystems in Eingriff kommen. Diese Endstücke 2 sind über Träger 4 miteinander verbunden. Zwischen den Endstücken 2 sind auf den Trägern 4 zwei Mittelstücke 3 gelagert. Diese Mittelstücke 3 werden mittels Klemmelementen 5 an den Trägern 4 festgeklemmt und sind leicht durch Lösen der Klemmelemente 5 an den Trägern 4 zu verschieben. Auf diese Weise wird es ermöglicht, Gegenstände unterschiedlicher Größe in dem Rahmen 1 aufzunehmen. Der gezeigte Rahmen 1 ist für eine Reflowlötanlage bestimmt und wird in ein Transportsystem einer Reflowlötanlage eingesetzt. Der Aufbau dieses Transportsystems wird folgend anhand der Figur 1 näher erläutert.

Bei dem in Figur 1 dargestellten Transportsystem handelt es sich um ein Transportsystem für eine sogenannte Tower-Reflowlötanlage. Bei dieser Anlage wird das Lötgut unten links in die Anlage eingebracht und durch den linken Teil des Transportsystems nach oben transportiert. Dabei durchläuft das mit der Lötpaste versehene Lötgut mehrere Vorheizzonen. Die eigentliche Lötung findet in der Lötzone im Bereich des horizontalen Transports statt. Das gelötete Lötgut wird dann wieder im rechten Teil der Anlage nach unten gefördert und passiert dabei eine Abkühlzone. Es ist klar, daß hinsichtlich Erschütterungen besonders der Teil der Anlage nach der eigentlichen Lötzone kritisch ist, da in diesem das Lot verflüssigt ist. Aber auch am Ende der Vorheizzonen vor Eintritt in die Lötzone sind Erschütterungen zu vermeiden, da die Lötpaste in diesem Bereich zwar noch nicht verflüssigt ist, jedoch eine Viskosität annimmt, bei der es aufgrund von Erschütterungen leicht zu einer Depositionierung von Bauteilen kommen kann, die von der Lötpaste an der gewünschten Stelle gehalten werden.

Im linken Teil der Figur 1 ist der vertikale Aufwärtstransport des Transportsystems dargestellt. An diesen schließt sich eine horizontale Transportstrecke von links nach rechts an, die in einen nach unten führenden vertikalen Abwärtstransport übergeht. In Figur 1 ist nur eine Seite des Transportsystems zu sehen. Diese eine Seite kommt in Eingriff mit einem Endstück 2 des Rahmens 1, wohingegen das gegenüberliegende Endstück 2 in derselben Weise von der anderen Seite des Transportsystems gehandhabt wird.

Die Zuführung der Rahmen 1 erfolgt über einen Quertransport 10, der unabhänigig vom erfindungsgemäßen Transportsystem ausgebildet ist. Bei dem Quertransport 10 kann es sich um einen Ketten- oder Bandförderer oder dergleichen handeln. Dieser bringt den Rahmen 1 zu einer nicht dargestellten Hubeinheit unterhalb des Aufwärtstransports. Diese Hubeinheit hebt einen Rahmen 1 in die Ausgangsposition 11. Wie gut aus der Figur 1 zu sehen, laufen zweimal zwei Kettenstränge 9a,9c und 9b,9d als Zugstrecken parallel zueinander.

Von diesen Kettensträngen laufen die Kettenstränge 9a und 9b nach oben, wohingegen die Kettenstränge 9c und 9d nach unten laufen. Alle Kettenstränge 9 sind mit nicht dargestellten vorstehenden Nieten versehen, wobei die Nieten der von unten nach oben laufenden Kettenstränge 9a, 9b in Aufnahmen 6 des Rahmens 1, die durch Kerben in den Endstücken 2 gebildet werden und die Kontaktpunkte von dem Rahmen 1 zu den Zugmitteln 9, 19 darstellen, eingreifen und diesen mit nach oben nehmen. Um ein Passieren der Nieten der nach unten laufenden Kettenstränge 9c, 9d zu ermöglichen, sind in Nachbarschaft zu den Aufnahmen 6 Passierstellen 7 vorgesehen. Diese Passierstellen 7 werden durch einfache Nuten in den Endstücken 2 gebildet.

Der aufgenommene Rahmen 1 wird durch die Kettenstränge 9a, 9b nach oben gefördert. Am obersten Punkt des Aufwärtstransports wird der Kettenstrang 9b mittels einer ersten Umlenkeinrichtung, die ein Umlenkelement 12 aufweist, um 90° nach rechts umgelenkt und wird im Horizontaltransport weiter nach rechts geführt. Die von diesem Kettenstrang 9b getragene Aufnahme 6 des Endstücks 2 bleibt dabei mit dem Kettenstrang in Eingriff.

Der andere Kettenstrang 9a wird von einer zweiten Umlenkeinrichtung umgelenkt und zwar zunächst von einem ersten Umlenkelement 13a um 90° nach rechts und dann von einem zweiten Umlenkelement 13b nochmals um 90° wieder nach unten. Der Kettenstrang 9a wird also um insgesamt 180° wieder nach unten umgelenkt und bildet dann den nach unten laufenden Kettenstrang 9d. Der Kettenstrang 9a trägt die Aufnahmen 6 bis zur zweiten Umlenkung an dem zweiten Umlenkelement 13b. Bevor jedoch der Kettenstrang 9a das zweite Mal umgelenkt wird, greifen bereits weitere Nieten des Kettenstranges 9b in zugeordnete Aufnahmen 6 des Rahmens 1 ein. Hierzu sind die mittleren Aufnahmen 6 vorgesehen, da während des Vertikaltransports der Rahmen 1 durch die äußeren Aufnahmen 6 gehalten wird.

Das heißt, wenn die in der Figur linke Seite des Rahmens 1 außer Eingriff von dem Kettenstrang 9a kommt, ist der Rahmen 1 bereits durch zumindest eine weitere Niet des Kettenstranges 9b im mittleren Bereich gestützt, so daß es zu keinerlei Lageveränderung des Rahmens 1 bzw. Erschütterung kommt.

Es wird also, da auf der nicht dargestellten Seite des Rahmens 1 genauso verfahren wird, der Rahmen 1 immer von zwei Nieten getragen, die nicht außer Eingriff kommen, sondern in der gewünschten Richtung umgelenkt werden. Zusätzlich zu diesen Nieten werden weitere Nieten eines Kettenstranges mit dem Rahmen in Eingriff gebracht, bevor die Nieten des anderen Kettenstranges außer Eingriff gebracht werden. Auf diese Weise wird eine weitestgehend erschütterungsfreie Änderung der Transportrichtung bzw. Transportebene erzielt.

Im horizontalen Bereich wird der Rahmen 1 nun nur von dem umgelenkten Kettenstrang 9b getragen, der bei Erreichen der rechten Endposition von einem Umlenkelement 13c der zweiten Umlenkeinrichtung 13 um 90° nach unten umgelenkt wird und den nach unten laufenden Kettenstrang 9f bildet. Bei Umlenkung des Kettenstranges 9b kommt zuerst der am Endstück 2 rechts angeordnete Niet außer Eingriff, da der Rahmen 1 von links nach rechts transportiert wird. Das Lösen des Eingriffs dieses Niets beeinträchtigt noch nicht die stabile Lage des Rahmens.

Auf der linken Seite des rechts in Figur 1 zu sehenden Aufwärtstransportes läuft der Kettenstrang 9h nach oben und zu diesem parallel der Kettenstrang 9i. Der nach oben laufende Kettenstrang 9h wird durch ein Umlenkelement 14 um 90° nach rechts umgelenkt, also in Transportrichtung des von links nach rechs transportierten Rahmens 1. Nach der Umlenkung kommt somit ein Niet des Kettenstranges 9h mit einer Ausnehmung 6 des Rahmens 1 in Eingriff, bevor die weiteren Nieten des Kettenstranges 9b aufgrund der Umlenkung am Umlenkelement 13c außer Eingriff kommen.

Der Rahmen 1 wird auf diese Weise weiter nach rechts bis zur rechten Endpositon gefördert. An dieser wird der Kettenstrang 9h mittels eines Umlenkelementes 12b der ersten Umlenkeinrichtung um 90° nach unten umgelenkt und bildet dann den Kettenstrang 9g. Bei dieser Umlenkung bleibt der Niet des Kettenstranges 9h mit dem Rahmen 1 in Eingriff. Gleichzeitig wird der letzte Niet des Kettenstranges 9f an dem Umlenkelement 13c umgelenkt und auch dieser bleibt mit dem Rahmen 1 in Eingriff, so daß der Rahmen 1 an den Kettensträngen 9f und 9g nach unten gefördert wird. Beim Abwärtstransport liegt der Rahmen 1 dann wieder auf den äußeren Aufnahmen 6 auf. Ein Passieren der gegenläufigen Kettenstränge 9 wird durch die bereits erwähnten Passierstellen 7 ermöglicht. In Position 15 wird der Rahmen 1 von einer nicht dargestellten Hubeinheit übernommen und dem Transportsystem entnommen.

Im unteren Bereich werden die Kettenstränge 9 durch Umlenkungen 16 um 180° umgelenkt, um eine einteilige umlaufende Kette zu ermöglichen. Der nach oben laufende Kettenstrang 9i wird an einer Umlenkung 17 um 90° nach links umgelenkt und im horizontalen Bereich nach links geführt und am linken Ende durch eine weitere Umlenkung 17 um 90° nach unten umgelenkt, um den nach unten führenden Kettenstrang 9c zu bilden. Auf diese Weise wird ein geschlossener Kreis und eine einteilige Kette zum Transport sowohl vertikal als auch horizontal ermöglicht.

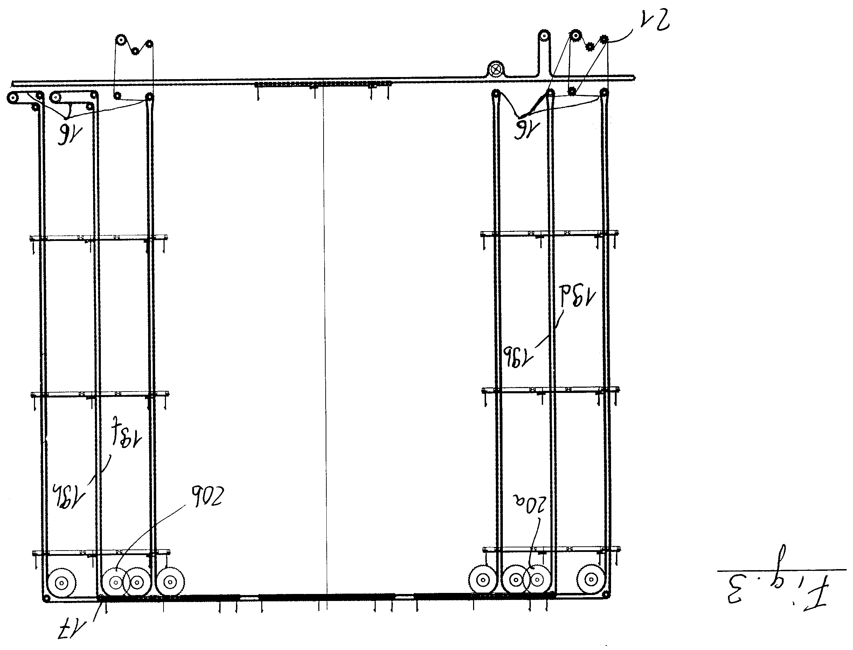

Figur 3 beschreibt ein alternatives Ausführungsbeispiel. Dieses Ausführungsbeispiel unterscheidet sich von dem vorangehenden Ausführungsbeispiel lediglich dadurch, daß auf der zweiten Seite des Transportsystems die Anordnung der Zugmittel abweichend, also nicht identisch vorgesehen ist.

Zur vereinfachten Darsteilung werden bei Figur 3 beide Seiten des Transportsystems übereinander dargestellt. Mit den Bezugszeichen 9a bis 9i sind die Kettenstränge einer Seite des Transportsystems bezeichnet, die von der Anordnung her hundertprozentig den bereits mit Bezugnahme zum ersten Ausführungsbeispiel (Figur 1) beschriebenen entsprechen und zum Transport einer Seite des Rahmens dienen.

Die abweichend angeordneten Kettenstränge, die zum Transport der anderen Seite des Rahmens 1 dienen, tragen das Bezugszeichen 19. Der Aufwärtstransport der zweiten Seite wird durch zwei parallel laufende Kettenstränge 19b und 19d gebildet. Der nach oben laufende Kettenstrang 19b nimmt mit seinen Nieten den Rahmen 1 aus der Position 11 heraus mit. Am obersten Punkt wird der Kettenstrang 19b mittels eines Umlenkelementes 20a um 90° nach rechts umgelenkt und wird somit wie der Rahmen 1 in Transportrichtung nach rechts geführt. Der mit dem Rahmen 1 in Eingriff befindliche Niet kann mit dem Rahmen 1 daher in Eingriff verbleiben. Auf der rechten Seite des Transportsystems wird der Kettenstrang 19b durch ein weiteres Umlenkelement 20b um 90° nach unten umgelenkt. Auch bei dieser Umlenkung kann der Niet mit der zugeordneten Aufnahme 6 des Rahmens 1 in Eingriff bleiben, da zum Zeitpunkt der Umlenkung auch der gesamte Rahmen 1 von dem horizontalen Transport in den vertikalen Transport gebracht wird. Nach der Umlenkung bildet der Kettenstrang 19b den nach unten laufenden Kettenstrang 19f.

Das Endstück 2 des Rahmens 1, das mit den Kettensträngen 19 in Eingriff ist, muß lediglich eine Aufnahme 6 aufweisen, da nur ein Niet von einer Aufnahme aufgenommen wird und dieser Niet über die gesamte Transportstrecke mit der Aufnahme 6 in Eingriff bleibt. Bei der gezeigten Führung der Kettenstränge 19 wird auf jeder Seite der Aufnahme 6 eine Passierstelle 7 benötigt, da beim Aufwärtstransport sich der gegenläufige Kettenstrang auf der anderen Seite des Nietes als beim Abwärtstransport befindet. Eine abweichende Kettenführung mit gleichbleibender Orientierung wäre möglich.

In der Position 15 wird der Rahmen 1 in der beschriebenen Weise von einer nicht dargestellten Hubeinheit übernommen. Der Kettenstrang 19f wird durch eine Umlenkung 16 um 180° nach oben umgelenkt und bildet dann den nach oben laufenden Kettenstrang 19h. Dieser wiederum wird im horizontalen Bereich des Transportsystems mittels einer Umlenkung 17 zunächst um 90° nach links umgelenkt und dann im linken Bereich wiederum um 90° nach unten umgelenkt. Nach dieser Umlenkung bildet der Kettenstrang 19h den nach unten laufenden Kettenstrang 19d, der wiederum mittels einer weiteren Umlenkung 16 um 180° umgelenkt wird und somit wieder zum nach oben laufenden Kettenstrang 19b wird und den Kreis schließt, um eine einstückige endlose Kette auszubilden. Der Kettenstrang 19 kann über Wellen und einen Getriebezug 21 zusammen mit dem Kettenstrang 9 angetrieben werden.

Es ist klar, daß die Nieten an den Kettensträngen und die Aufnahmen 6 an dem Rahmen 1 in geeigneten Abständen vorgesehen sein müssen. Im Falle des Kettenstranges 19 genügt ein einheitlicher Abstand der Nieten, da bei diesem die Nieten während des gesamten Transportes mit den Aufnahmen in Eingriff bleiben. Im Falle der Kettenstränge 9 müssen die Abstände so vorgesehen sein, daß vor dem Außereingriffbringen von Nieten ggf. bereits andere Nieten mit den Aufnahmen 6 in Eingriff gebracht wurden. Da es sich um ein umlaufendes System handelt, müssen die Abstände der Nieten einen störungsfreien Endlosbetrieb des Systems über die gesamte Transportstrecke ermöglichen. Bei dem beschriebenen Ausführungsbeispiel kommt eine Teilung mit drei gleichen Abständen und einem folgendem größerem Abstand zur Anwendung.

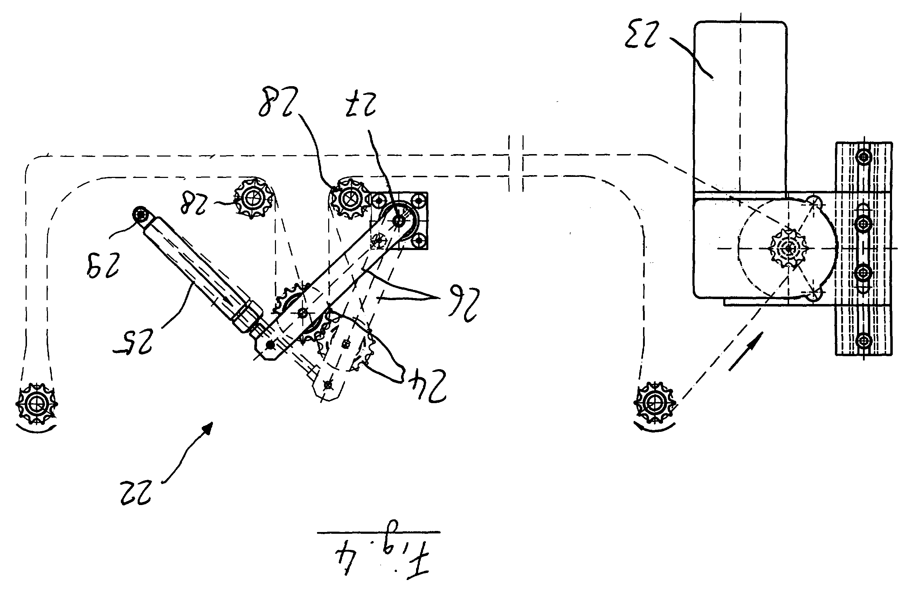

Sowohl der Kettenstrang 9 als auch der Kettenstrang 19 werden von einer Spanneinrichtung 22 gespannt, die in Figur 4 beschrieben ist. Die Kette wird von einem Antriebsmotor 23 angetrieben und über Ritzel 28 und ein Spannritzel 24 ausgelenkt, um mittels einer Gasdruckfeder 25 eine vorbestimmte Spannkraft auf die Kette aufzubringen. Hierzu ist das Spannritzel 24 an einem Hebel 26 um einen Drehpunkt 27 verschwenkbar gelagert. Die Gasdruckfeder 25 ist an einem Punkt 29 verschwenkbar gelagert und mit dem Hebel 26 verbunden. Auf diese Weise wird eine vorbestimmte Kraft von der Gasdruckfeder 25 auf den Hebel 26 aufgebracht und über diesen das Spannritzel 24 soweit ausgelenkt, bis ein Kräftegleichgewicht zwischen Zugkraft der Kette und Spannkraft am Spannritzel 24 aufgrund der Gasdruckfeder 25 besteht.

Offenbart wird ein Transportsystem mit einer Fördereinrichtung, die zumindest zwei Förderglieder umfaßt, wobei der Gegenstand mit zumindest jeweils einem Kontaktpunkt mit einem Förderglied in Verbindung ist. Eines der Förderglieder wird mittels einer ersten Umlenkeinrichtung umgelenkt, ohne den Kontakt zum Gegenstand zu verlieren und das andere Förderglied wird mittels einer zweiten Umlenkeinrichtung so umgelenkt, daß es dabei den Kontakt zum Gegenstand verliert, nachdem ein anderes Förderglied mit zumindest einem weiteren Kontaktpunkt des Gegenstandes in Verbindung getreten ist, wobei die Kontaktpunkte in einem Abstand zueinander angeordnet sind, um eine stabile Halterung des Gegenstandes zu gewährleisten. Mit dem Transportsystem ist eine erschütterungsfreie Förderung eines Gegenstandes möglich. Der Gegenstand kann so gefördert werden, daß er immer waagrecht gehalten wird, wobei sich die Transportrichtung mehrmals von der Horizontalen in die Vertikale oder umgekehrt ändern kann.

## Patentansprüche

1. Transportsystem mit zumindest zwei zueinander senkrecht zur Förderrichtung beabstandeten als Zugmittel (9, 19) ausgebildeten Fördermitteln, die einen Gegenstand (1) mit zumindest jeweils einem Kontaktpunkt von einem auf ein anderes Niveau und anschließend in Richtung der Zugmittelgeschwindigkeit transportieren und von denen eine Fördereinheit in zwei zueinander beabstandeten Förderstrecken (9a, 9b, 9c, 9d) die gleiche Geschwindigkeitsrichtung aufweist, in deren einer Förderstrecke das Zugmittel (9, 19) einen Gegenstand um eine erste Umlenkeinrichtung (12) transportiert, und in deren anderer Förderstrecke das Zugmittel (9, 19) mittels einer zweiten Umlenkeinrichtung (13) umgelenkt wird,
**dadurch gekennzeichnet**,
daß die Fördereinheit mit einem Zugmittel (9, 19) arbeitet, das bei der zweiten Umlenkeinrichtung (13) den Kontakt zum Gegenstand (1) verliert, nachdem das mit der ersten Umlenkeinrichtung (12) umgelenkte Zugmittel (9, 19) mit wenigstens einem weiteren zum ersten beabstandeten Kontaktpunkt des Gegenstandes (1) in Verbindung getreten ist.

2. Transportsystem nach Anspruch 1, **dadurch gekennzeichnet**, **daß** die Zugmittel (9, 19) mittels der ersten Umlenkeinrichtung (12) um 90° umgelenkt werden.

3. Transportsystem nach Anspruch 1 oder 2, **dadurch gekennzeichnet**, **daß** die zumindest drei Förderstrecken (9a, 9b, 19b) bis zu den Umlenkeinrichtungen (12, 13, 14, 20) parallel verlaufen.

4. Transportsystem nach einem der Ansprüche 1 bis 3, **dadurch gekennzeichnet**, **daß** die zwei beabstandeten Zugmittel (9, 19) durch die erste Umlenkeinrichtung (12) und anschließend durch eine weitere Umlenkeinrichtung umgelenkt werden.

5. Transportsystem nach einem der Ansprüche 1 bis 4, **dadurch gekennzeichnet**, **daß** an den Zugmitteln (9, 19) in bestimmten Abständen Kontaktpunkte (6) vorgesehen sind.

6. Transportsystem nach einem der Ansprüche 1 bis 5, **dadurch gekennzeichnet**, **daß** die Abstände gleichbleibend sind.

7. Transportsystem nach einem der Ansprüche 1 bis 6, **dadurch gekennzeichnet**, **daß** die Kontaktpunkte (6) in Form von Auflagen für den Gegenstand (1) ausgebildet sind.

8. Transportsystem nach einem der Ansprüche 1 bis 7, **dadurch gekennzeichnet**, **daß** der Gegenstand (1) durch Zwischenschaltung eines Rahmens transportiert wird, der in Verbindung mit den Kontaktpunkten (6) kommt.

9. Transportsystem nach einem der Ansprüche 1 bis 8, **dadurch gekennzeichnet**, **daß** der Rahmen mehrere Aufnahmen für Elemente der Zugmittel (9, 19) aufweist.

10. Transportsystem nach einem der Ansprüche 1 bis 9, **dadurch gekennzeichnet**, **daß** die Zugmittel (9, 19) mittels einer Spanneinrichtung (22) spannbar sind.

11. Transportsystem nach einem der Ansprüche 1 bis 10, **dadurch gekennzeichnet**, **daß** der Gegenstand (1) oder Rahmen immer an mindestens drei Kontaktpunkten (6) mit den Zugmitteln (9, 19) in Verbindung ist.

12. Transportsystem nach einem der Ansprüche 1 bis 11, **dadurch gekennzeichnet**, **daß** der Gegenstand (1) oder Rahmen immer an einer Seite an mindestens zwei Kontaktpunkten (6) mit den Zugmitteln (9, 19) in Verbindung ist und an der gegenüberliegenden Seite mit mindestens einem Kontaktpunkt (6) mit einem Zugmittel (9, 19) in Verbindung ist.

13. Transportsystem nach einem der Ansprüche 9 bis 12, **dadurch gekennzeichnet**, **daß** der Rahmen zumindest eine Passierstelle zur Passage von Zugmitteln (9, 19) aufweist.

14. Transportsystem nach einem der Ansprüche 1 bis 13, **dadurch gekennzeichnet**, **daß** zumindest zwei Zugmittel (9, 19) zusammenhängen und als endloses Zugmittel (9, 19) umlaufen.
